# EUROPEAN PATENT SPECIFICATION

(11) **EP 2 681 349 B1**
(45) Date of publication and mention of the grant of the patent: **20.05.2015**
(21) Application number: 12710525.2
(22) Date of filing: 22.02.2012
(51) Int. Cl.: C25B 1/04, C25B 9/18, C25B 15/08, H01M 8/06, H01M 8/24, H01M 8/04, C25B 9/00, H01M 8/18, H01M 8/12

(54) **METHOD AND ARRANGEMENT FOR IMPROVED HEATING OF A HIGH TEMPERATURE FUEL CELL SYSTEM**
VERFAHREN UND ANORDNUNG FÜR VERBESSERTE ERHITZUNG IN EINER HOCHTEMPERATUR-BRENNSTOFFZELLENANLAGE
PROCÉDÉ ET AGENCEMENT POUR CHAUFFAGE AMÉLIORÉ D'UN SYSTÈME DE PILES À COMBUSTIBLE À HAUTE TEMPÉRATURE

(30) Priority: 28.02.2011 FI 20115203
(43) Date of publication of application: 08.01.2014
(73) Proprietor: Convion Oy, 02150 Espoo (FI)
(72) Inventor: ÅSTRÖM, Kim, FI - 02460 Kirkkonummi (FI); LAITINEN, Marko, FI-01690 Vantaa (FI); HOTTINEN, Tero, FI-08680 Lohja (FI)
(74) Representative: LEITZINGER OY
(86) International application number: PCT/FI2012/050177
(87) International publication number: WO 2012/117158

(56) References cited:
- US-A1- 2002 051 898
- US-A1- 2008 060 935
- US-A1- 2010 248 049

## Description

### The field of the invention

Fuel cell devices are becoming general in fulfilling different kind of electricity production needs. Fuel cell devices are electrochemical devices supplied with reactants for producing electrical energy.

### The state of the art

Fuel cell devices are electrochemical devices, which enables production of electricity with high duty ratio in an environmentally friendly process. Fuel cell technology is considered as one of the most promising future energy production methods.

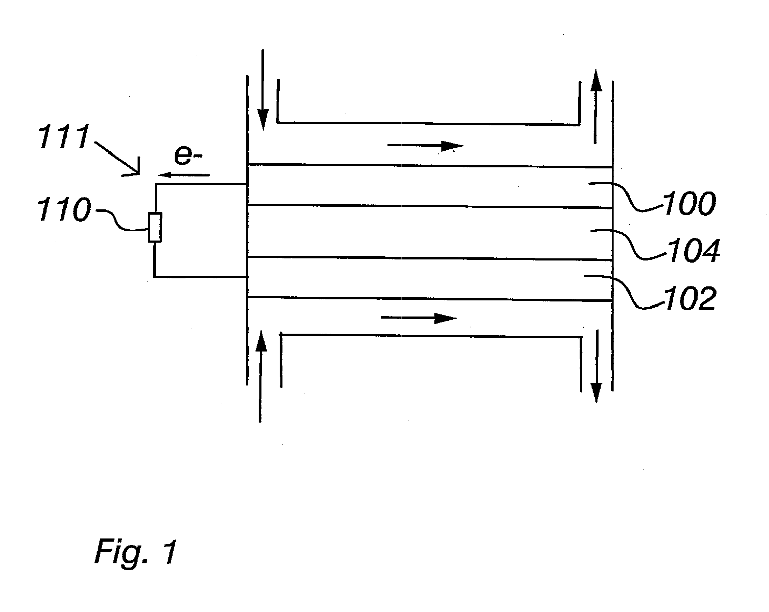

Fuel cell, as presented in fig 1, comprises an anode side 100 and a cathode side 102 and an electrolyte material 104 between them. The reactants fed to the fuel cell devices undergo a process in which electrical energy and heat are produced as a result of an exothermal reaction.

In solid oxide fuel cells (SOFCs) oxygen 106 is fed to the cathode side 102 and it is reduced to a negative oxygen ion by receiving electrons from the cathode. The negative oxygen ion goes through the electrolyte material 104 to the anode side 100 where it reacts with the used fuel 108 producing water and also typically carbondioxide (CO2). Between anode and cathode is an external electric circuit 111 for transferring electrons e- to the cathode. External electric circuit comprises a load 110.

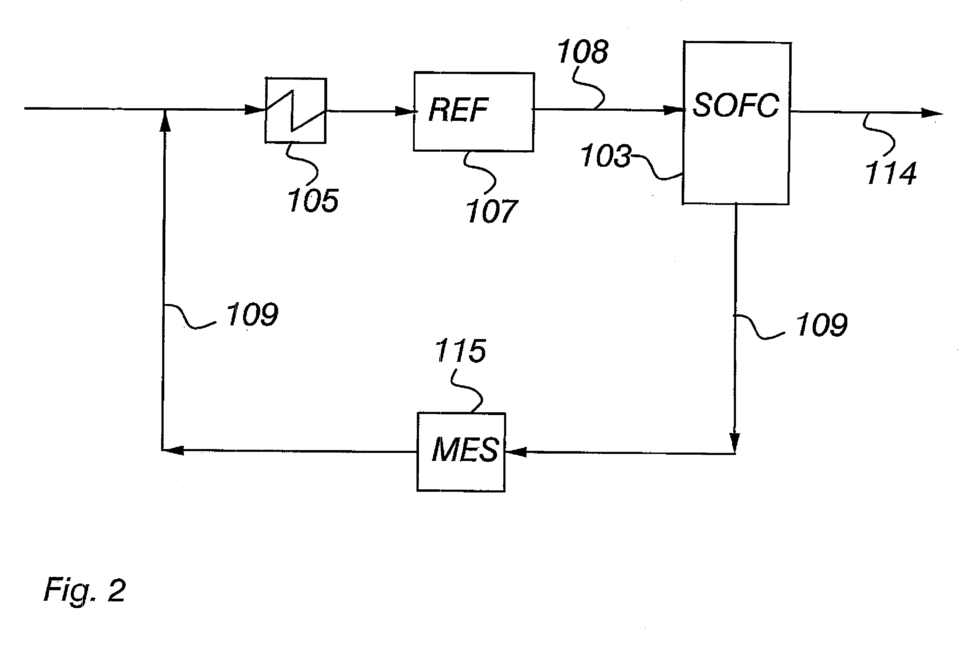

In figure 2 is presented a SOFC device, which can utilize as fuel for example natural gas, bio gas, methanol or other compounds containing hydrocarbons. SOFC device in figure 2 comprises planar-like fuel cells in stack formation 103 (SOFC stack). Each fuel cell comprises anode 100 and cathode 102 structure as presented in figure 1. Part of the used fuel is recirculated in feedback arrangement 109 through each anode.

SOFC device in fig 2 comprises a fuel heat exchanger 105 and a reformer 107. Heat exchangers are used for controlling thermal conditions in fuel cell process and there can be located more than one of them in different locations of SOFC device. The extra thermal energy in circulating gas is recovered in the heat exchanger 105 to be utilized in SOFC device or outside in a heat recovering unit. The heat recovering heat exchanger can thus locate in different locations as presented in figure 2. Reformer is a device that converts the fuel such as for example natural gas to a composition suitable for fuel cells, for example to a composition containing half hydrogen and other half methane, carbondioxide and inert gases. The reformer is not, however, necessary in all fuel cell implementations, because untreated fuel may also be fed directly to the fuel cells 103.

By using measurement means 115 (such as fuel flow meter, current meter and temperature meter) is carried out necessary measurements for the operation of the SOFC device from the through anode recirculating gas. Only part of the gas used at anodes 100 (figure 1) of the fuel cells 103 is recirculated through anodes in feedback arrangement 109 and thus in figure 2 is presented diagrammatically also as the other part of the gas is exhausted 114.

Heat management of the fuel cell stacks is one of the key functions of the balance of plant (BoP) equipment in a high temperature fuel cell system. The heat balance of the fuel cells stacks is affected by many mechanisms including internal reforming, fuel cell reactions, heat transport by flow of reactants and direct heat exchange with the surrounding structures. Typical methods for the control of the temperature balance comprise adjustment of the internal reforming rate and adjustment of air flow and cathode inlet temperature.

System heaters can be implemented as electrical heaters comprising heating resistors or gas burners or a combination thereof. Benefits of electrical heaters include excellent controllability and the ability to place them directly in reactant streams or structures to be heated. A drawback of electrical heaters is their tendency to generate earth fault currents, particularly in the case of high temperature heaters. Also fuel cell stacks, being high temperature electrical devices, may generate significant earth fault currents depending on isolation arrangements in their reactant feed, supporting structures and loading arrangement.

High temperature fuel cells (MCFC, SOFC) have operating temperatures in the range of 600 - 1000 °C. High temperatures are required for achieving sufficient conductivity for proper operation, i.e. sufficiently low area specific resistance (ASR) to draw currents from the fuel cells. Below their nominal operating temperature, these fuel cells experience an increased ASR, which limits the amount of current that can be drawn from the cells. Since heat production in the cells is proportional to the current, sufficient heat production within the fuel cell for maintaining an operating temperature is not achievable until at relatively high currents. Typically 50% of nominal current or higher is required before the heat production within the stack suffices to compensate for mechanisms of heat removal. These mechanisms for heat removal include endothermic reactions taking place at fuel cell anodes (internal reforming), heat transport by reactant flow and heat transfer to surroundings.

As a consequence of the inability of stacks to internally heat up at low temperatures, heat has to be applied from an external source in system start-up until fuel cells are relatively close to their nominal operating temperature, allowing for currents large enough to bring the heating further. A convenient method for applying external heat to fuel cell stacks during start-up is to utilize electrical heaters offering excellent controllability and flexibility with respect to placement at a moderate price. The price and complexity of electrical heaters is in turn strongly related to the maximum temperature and heat duty at which the heaters are required to operate. Hence, the last tens of degrees required from the electrical heaters in order to bring the fuel cells up to near-nominal temperatures become determining for their dimensioning. A small reduction in the maximum temperature that needs to be achieved or in the heat duty that needs to be delivered at this temperature would have a significant effect on system compactness and on heater sizing, thus reducing also economical costs.

Typically the most significant mechanism for heat removal inside stacks is internal steam reforming in which methane reacts with steam, i.e. H₂O, to hydrogen and carbon monoxide in a strongly endothermic process:

CH₄ + H₂O = CO + 3H₂

During nominal operation of the fuel cell, this mechanism of heat removal is beneficial in reducing the need for stack cooling by other means e.g. excessive air feed. In a typical system, the internal reforming may account for up to 75% or more of the heat removal from stack reactions. During system heat-up, the cooling effect of internal reforming is, in turn, clearly a negative effect as it increases the amount of heat that needs to be applied from external sources, e.g. electrical heaters. The amount of internal reforming depends on the fuel feed and the extent of reforming that takes place outside the stacks, e.g. in a pre-reformer. In the absence of a pre-reformer or in the case of an adiabatic pre-reformer most of the internal reforming will take place in the stack thus providing a significant cooling effect proportional to the fuel feed. The fuel feed is in turn essentially proportional to the current as system fuel utilization is better to be maintained in a narrow range, typically 75-85%.

In prior art document US2008/060935 A1 is presented an arrangement in which a fuel cell and an electrolyzer cell are integrated to form a single structure in order to produce pure hydrogen in the electrolyzer cell by utilizing electrical energy and heat energy produced by the fuel cell. If this kind of arrangement is accomplished in a high temperature fuel cell system, e.g. in a solid oxide fuel cell (SOFC) system, it would be mechanically difficult to construct due to opposite direction current feeds to adjacent cells.

In prior art document US2002/051898 A1 is presented a regenerative fuel cell and electrolyzer arrangement, in which fuel cells and electrolyzer are connected to same pipings in order to produce or consume hydrogen depending on the application. In said document is not used same fuel cell unit both in electrolysis and in fuel cell reaction, and is not utilized heat energy of chemical reactions in order to warm the fuel cell system up. The fuel cells of US2002/051898 A1 are PEM (Proton Exchange Membrane) fuel cells, in which are not performed internal reforming reactions.

In the prior art document US2010/248049 A1 is presented a method for a fuel cell system in interruption situations, i.e. in shutdown situations. The fuel cell columns of US2010/248049 A1 are in a serial connection, i.e. latter fuel cell columns are fed by fuel which is already flown through first fuel cell columns in said serial connection. In US2010/248049 A1 is not presented utilization of heat energy of chemical reactions in neither operation mode in order to warm up the fuel cell system.

### Short description of the invention

The object of the invention is to accomplish an enhanced heating arrangement especially for start up situations of a fuel cell device.

This is achieved by an arrangement for enhancing start-up heating of a high temperature fuel cell device, each fuel cell in the fuel cell device comprising an anode side, a cathode side, an electrolyte between the anode side and the cathode side, and the arrangement comprises at least one heating source for heating the fuel cells. The arrangement comprises means to provide a part of the fuel cells with voltage and current to facilitate an electrolysis mode of operation producing hydrogen, means to simultaneously load another part of the fuel cells, means for circulating fuel through the anode sides of the fuel cells and for performing internal circulation of hydrogen and power in the fuel cell device to supply at least part of the hydrogen produced by the electrolysis to the fuel cells being loaded and said power being utilized in the heating of the fuel cells at least relatively close to their nominal operating temperature, and the arrangement comprises the means to release requirements on the heating source by decreasing the amount of fuel feed-in and by decreasing the amount of internal reforming required to draw current from the fuel cells during start-up of the fuel cell device.

The focus of the invention is also a method for enhancing start-up heating of a high temperature fuel cell device, in which method is produced electricity by fuel cells comprising an anode side, a cathode side, and an electrolyte between the anode side and the cathode side, and the fuel cells are heated by using at least one heating source. In the method is provided a part of the fuel cells with voltage and current to facilitate an electrolysis mode of operation producing hydrogen, is simultaneously loaded another part of the fuel cells, is circulated fuel through the anode sides of the fuel cells, is performed internal circulation of hydrogen and power in the fuel cell device to supply at least part of the hydrogen produced by the electrolysis to the fuel cells being loaded, and said power being utilized in the heating of the fuel cells at least relatively close to their nominal operating temperature, and in the method is released requirements on the heating source by decreasing the amount of fuel feed-in and by decreasing the amount of internal reforming required to draw current from the fuel cells during start-up of the fuel cell device.

The invention is based on integration of an electrolysis mode of operation of part of the fuel cells producing hydrogen and simultaneous loading mode of operation of another part of the fuel cells and the invention is further based on circulating fuel through the anode sides of the fuel cells to supply at least part of the hydrogen produced by the electrolysis to the fuel cells being loaded.

The main benefits of the invention are that cost savings are achieved because smaller and cheaper heating sources are enough to fulfil external heating demands, and furthermore the fuel cell system has a more compact size.

### Short description of figures

- Figure 1: presents a single fuel cell structure.
- Figure 2: presents an example of a fuel cell device.
- Figure 3: presents a preferred embodiment according to the present invention.
- Figure 4: presents an example of a power stage topology of a pre-regulator.
- Figure 5: presents an example curve diagram of a start-up process of the high temperature fuel cell device.
- Figure 6: presents a DC-DC converter topology for bi-directional power flow.

### Detailed description of the invention

The invention presents a method and arrangement for enhancing the heat-up of high temperature fuel cells in the end of the start-up heating phase by operating a part of the fuel cells in an anode circulated system in an electrolysis mode of operation thus producing hydrogen, which in turn is consumed by other fuel cells that are simultaneously loaded. The loading process of the fuel cells produces water, which is used as a fuel in the electrolysis mode of operation. Thus the arrangement according to the invention operates as an advanced interactive fuel cell system. Due to the internal circulation of power and hydrogen in the fuel cell circulation loop, the amount of fresh fuel feed (i.e. methane) required for driving current in the fuel cells is significantly reduced and thereby the amount of stack cooling by internal reforming can be significantly reduced. This enhances the heating of fuel cells and reduces the need and requirements for external heating source, e.g. electrical heaters, in the start-up process of the fuel cell device.

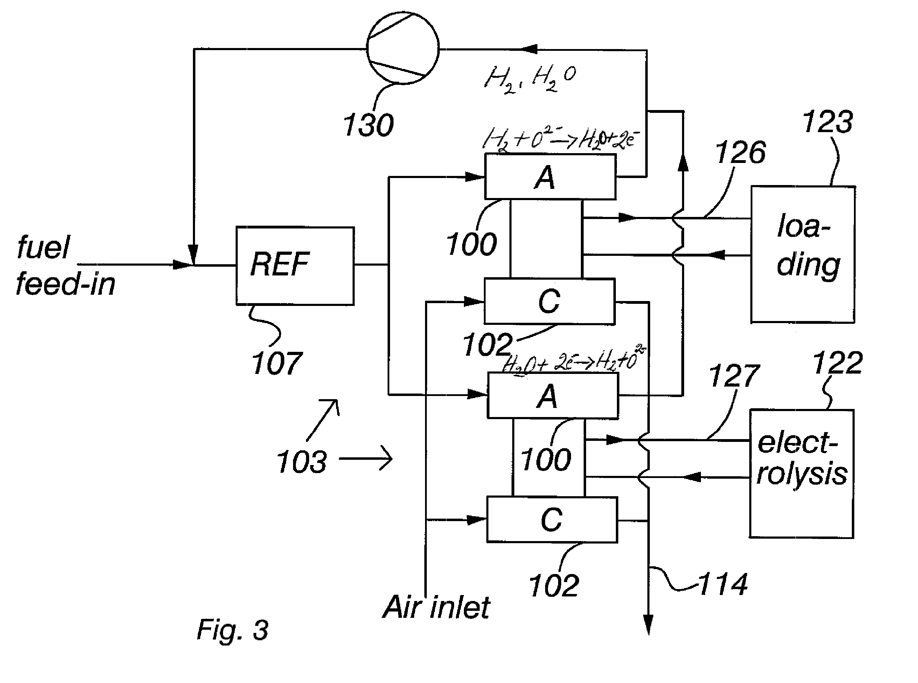

In figure 3 is presented a preferred embodiment according to the present invention for enhanced heating of fuel cell stacks by a significant reduction of the internal reforming and without the need for external reforming means. The invention is based on operating a part of at least two groups of fuel cells 103 in electrolysis mode of operation 122 whilst utilizing anode circulation to recirculate the formed hydrogen back to the fuel feed, available for being used by the other part of fuel cells being operated in normal fuel cell mode operation 123. Letter A symbolizes anode sides of the fuel cells 103, and letter C symbolizes cathode sides of the fuel cells 103. Reference sign 126 symbolizes load current of the fuel cells being loaded, and reference sign 127 symbolizes electrolysis current of the fuel cells being operated in electrolysis mode of operation. Reference sign 130 represents a blower in a feedback as shown in figure 3. In the fuel cell stacks being operated in electrolysis mode, the fuel cell reactions are reversed with respect to normal fuel cell mode operation

H₂ + O²⁻ <- H₂O + 2e⁻

whereas in the other part of fuel cells operating normally the reaction for hydrogen is

H₂ +O²⁻ = H₂O + 2^{e-}

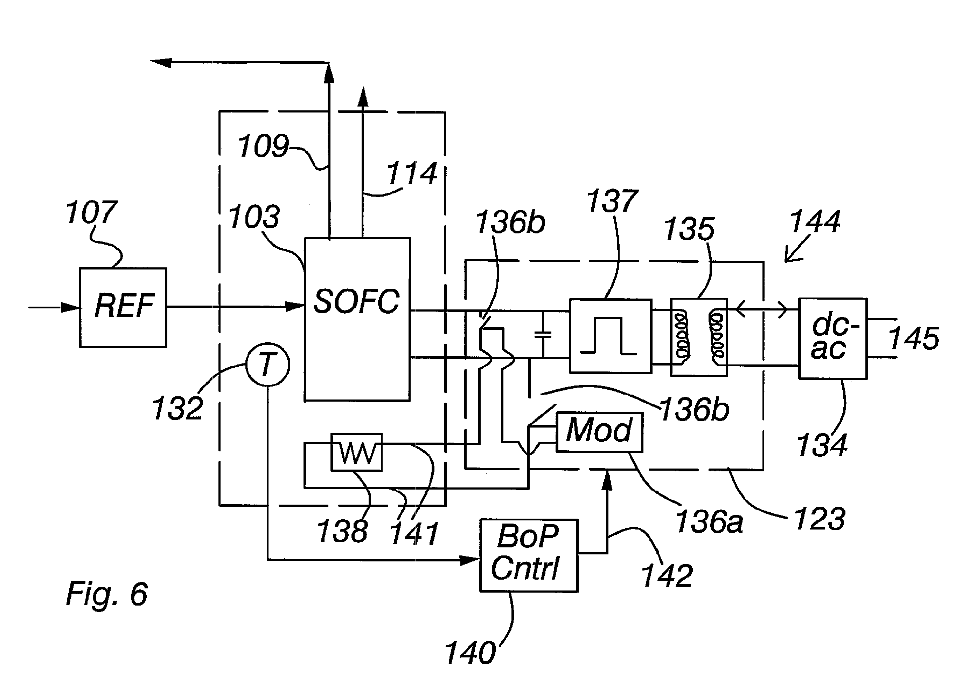

The arrangement of figure 3 comprises means 109 for performing internal circulation of hydrogen and power in the fuel cell device, said hydrogen being consumed in the loading of the fuel cells 103, and said power being utilized in the heating of the fuel cells 103 at least relatively close to their nominal operating temperature. If the two reactions presented above are balanced, i.e. electrolysis reactions and normal loading reactions happen at equal rates, fuel (CH4) supply can, in theory, be totally discontinued while water and hydrogen is being circulated within the system. In practise, a small amount of CH4 supply and possibly water supply will be needed to assure that a reducing atmosphere with sufficient steam content can be maintained at all anodes. If recirculation rate is substantially high with respect to the fuel feed and reactant formation at anodes, gas concentrations at different stacks will effectively even out. The arrangement according to the invention comprises the means 122, 123, 109 to release requirements on the external heating source 138 (figure 6) by minimizing the amount of fuel feed-in and by minimizing the amount of internal reforming required to draw current from the fuel cells 103 during start-up of the fuel cell device.

In the above described fuel cell reactions, heat is generated without a current-proportional amount of heat being consumed in methane steam reformation. In essence power is being circulated in a loop between electrolysis 122 and normal operation mode 123 stacks in a lossy manner. Main heat losses occur at the stacks which are hence heated. Due to the achievable significant reduction of internal reforming, less external heating is required and moreover, stacks will become heat-balanced at lower currents, e.g. 25% of nominal compared to e.g. 50% of nominal with internal reforming. Hence, requirements on electrical heaters can be achieved with smaller and cheaper heaters enabling a more compact system as a result.

In order to operate stacks in an electrolysis mode of operation a voltage higher than the Nernst potential and current feed into the stacks is required. Nernst potential is the equilibrium potential between the electrodes 100, 102 and ion concentrations in the electrolyte 104, and it can be determined on the basis of a Nernst equation. In a preferred embodiment of the invention, means to produce this voltage and reversed current are incorporated to the power electronics that normally act as a load for the stacks. Hence, the power electronics have to be capable of bidirectional power flow and capable of operating a stack voltage significantly higher than in a loading mode. These stack voltage values are for example 1.2 - 1.5 V per fuel cell in electrolysis and 0.7-0.9 V per fuel cell in loading. Preferably, the topology of the power electronics is of such type that the need for capability to operate at a higher voltage does not cause any unbeneficial point of operation in normal loading mode. This is the case for example in non-isolated step-up topologies.

In the preferred embodiment of figure 3, if an isolated power electronics topology is used, the capability of operation at higher stack voltages than nominal voltages can be conveniently achieved by utilizing a non-isolating pre-regulator stage as the means 122 to provide with voltage and current to facilitate an electrolysis mode of operation prior to the isolating power stage, i.e. prior to the means 123 for loading the fuel cells 103. Preferably the means 122 to provide with voltage and current to facilitate an electrolysis mode of operation are integrated to said means 123 for loading the fuel cells 103.

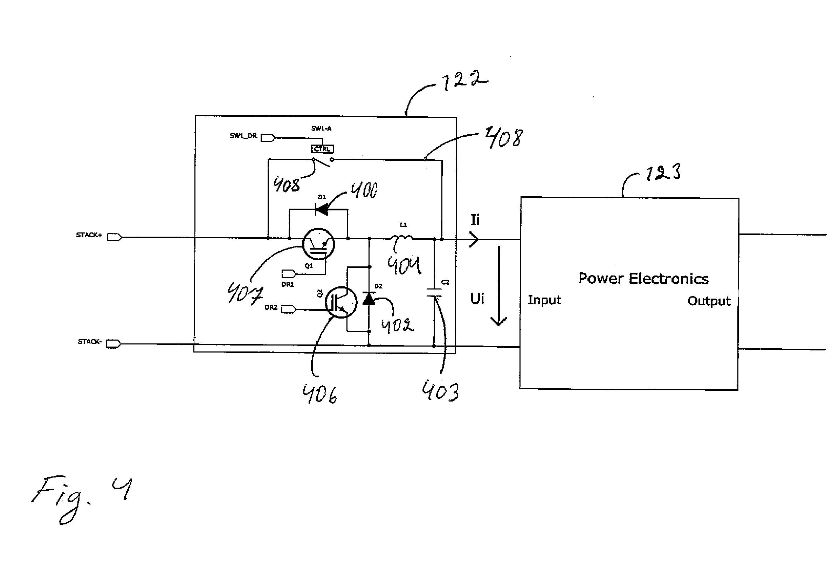

In figure 4 is presented an example of a power stage topology of the pre-regulator 122 capable of boost operation in a reversed power flow mode. Said topology comprises at least four discrete semiconductors, i.e. two diodes 400, 402 and a capacitor 403, one inductive component, i.e. a coil 404, and transistor switches 406, 407 in parallel connection to the diodes 400, 402, as shown in figure 4. The transistor switches 406, 407 can be realized by IGBT, mosfet, jfet, bibolar or by some other transistors. For operating the so called boost operation, i.e. for driving operation of the non-isolating pre-regulator stage from a lower voltage level to a higher voltage level, switch 406 and diode 400 are used. In the beginning of loading, when voltage of the fuel cells are close to the Nernst potential voltage, the pre-regulator is, in turn used in power stage operation mode to reduce the stack voltage level to e.g. 0.9V/cell, by using switch 407 and diode 402. Thus there is no need to dimension the main power converter for capability of handling start-up voltages of fuel cells, thus allowing for a more optimized design of the main power converter with respect to nominal power operation. Correspondingly, the pre-regulator need not be dimensioned for the full power level of the fuel cells 103. By equipping the pre-regulator 122 with the bypass means 408 comprising a bypass wiring 408 and a bypass switch 408 (figure 4), which is preferably a relay mechanism, the pre-regulator can be bypassed at e.g. a power level of 30% of nominal level whereby stack voltages have decreased from peak values down to a range which can be tolerated directly by the main power converter 123. Thus the pre-regulator 122, i.e. the means 122 to provide a part of the fuel cells 103 with voltage and current to facilitate an electrolysis mode of operation are preferably rated below the maximum power of the power stage topology. The need of dimensioning the pre-regulator for only partial load current allows for significant cost reductions in components and related cooling arrangements. For example, a current level of 30% of nominal current is also sufficient for the electrolysis mode of operation.

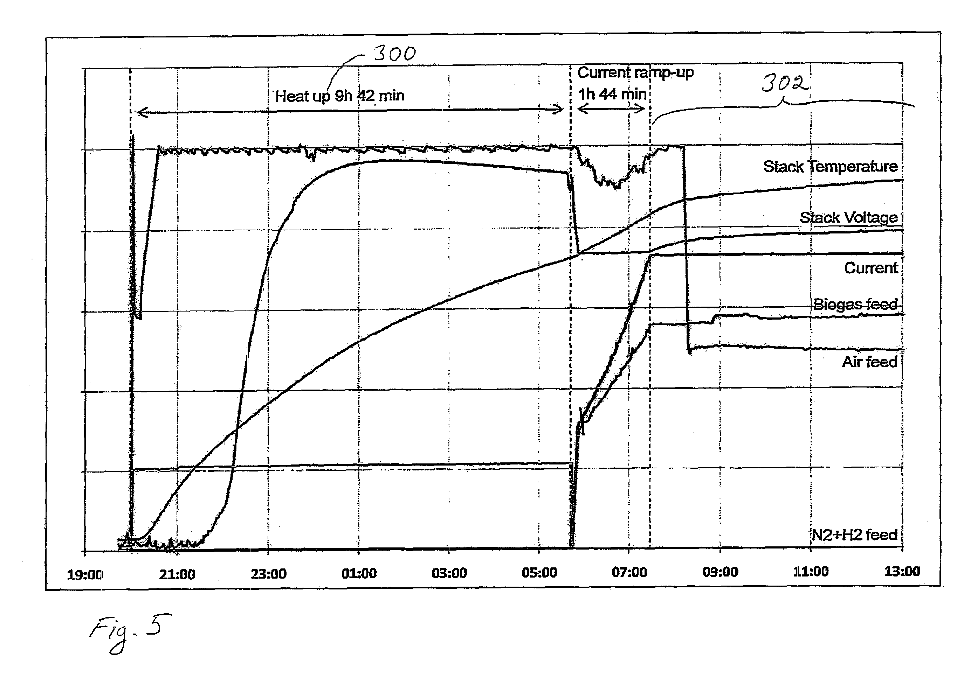

In figure 5 is presented an example curve diagram of a start-up process of the high temperature fuel cell device. In the first stage 300 of the heating process of the fuel cell stacks 103, for example the electrolysis mode of operation 300, fuel cell stack voltage values are substantially higher than nominal voltage values in normal operation mode 302 of the fuel cells 103. Figure 4 also describes how load current alters in the heating process for example in respect to the stack voltage values and stack temperature values. In the described preferred embodiment utilizing the non-isolating pre-regulator in front of the isolating main power stage, the additional cost associated to the capability of electrolysis operation is very limited, because there is utilized the adaptability of the main power stage for bi-directional power flow. In many isolating topologies, among them the preferred full-bridge topology, capability for bi-directional power flow can be arranged at relatively low cost with minimum additional complexity. The capability of bidirectional power flow in the main converter can be utilized also for other functions, such as for isolating operating resistors from the grid. Thus, the cost overhead related only to the capability of the described electrolysis operation remains low in comparison to the system benefits.

In figure 6 is presented a DC-DC (Direct Current-Direct Current) converter 123 as an example of the means 123 for loading the fuel cells 103. The DC-DC converter 123 comprises a galvanic isolation stage 135 and power electronic switching means 137 for performing bidirectional power flow 144 to operate a fuel cell voltage substantially higher than a fuel cell voltage in the loading of the fuel cells 103. Said means 137 are arranged for example by additional semiconductors, additional control electronics and power electronics switches. The DC-DC converter comprises inherently a galvanic isolation stage which as such can be utilized to provide isolation also for an at least one heating resistor 138 provided that overall power rating (in any direction) of the isolation stage need not be increased. Thus said least one heating resistor is allowed to be located via a DC (Direct Current) voltage connection 141 in parallel with the fuel cell stacks 103 in the fuel cell side. Consequently, the at least one heating resistor 138 utilizes the same galvanic isolation as the fuel cell stacks with a minimum increase in component count and cost compared to a single-directional converter. Because the converter according to the invention is arranged to perform bi-directional power flow through the addition of a few semiconductor switches, it is possible to feed more power to the at least one heating resistor from the converter than the related fuel cell stacks 103 are producing, for example during system heat-up.

The embodiment of figure 3 further comprises active control means 136 for pulse width modulation (PWM) of the heating resistors 138, said means 136 being preferably integrated with the DC/DC converter 123. The control processor 136a can be accomplished of analog electronics processor and/or digital electronics processor. The switching means 136b are for example bipolar transistor, JFET transistor, MOSFET transistor, IGBT or some other transistor switches. Also the arrangement comprises a balance-of-plant (BoP) control system 140 for determining a heating power set point. The control system 140 communicates with the DC-DC converter 123 for example to command the heating power set point to the converter 123. Said communication is preferably performed via a serial communication arrangement 142 to optimize use of instrumentation cabling.

Although above with figures is presented SOFC fuel cell devices, it should be noted, that embodiments according to the invention can be utilized in different kinds of high temperature fuel cell devices, such as for example in MCFC (Molten Carbonate Fuel Cells) devices. MCFCs are high temperature fuel cells that use an electrolyte composed of a molten carbonate salt mixture suspended in a porous, chemically inert ceramic matrix.

Although the invention has been presented in reference to the attached figures and specification, the invention is by no means limited to those as the invention is subject to variations within the scope allowed for by the claims.

## Claims

1. An arrangement for enhancing start-up heating of a high temperature fuel cell device, each fuel cell (103) in the fuel cell device comprising an anode side (100), a cathode side (102), an electrolyte (104) between the anode side and the cathode side, and the arrangement comprises at least one heat-Ing source for heating the fuel cells (103), **characterized by**, that the arrangement comprises means (122) to provide a part of the fuel cells (103) with voltage and current to facilitate an electrolysis mode of operation producing hydrogen, means (123) to simultaneously load another part of the fuel cells, means (109) for circulating fuel through the anode sides (100) of the fuel cells (103) and for performing Internal circulation of hydrogen and power In the fuel cell device to supply at least part of the hydrogen produced by the electrolysis to the fuel cells (103) being loaded and said power being utilized in the heating of the fuel cells (103) at least relatively close to their nominal operating temperature, and the arrangement comprises the means (122, 123, 109) to release requirements on the heating source (138) by decreasing the amount of fuel feed-in and by decreasing the amount of internal reforming required to draw current from the fuel cells (103) during start-up of the fuel cell device.

2. An arrangement in accordance with claim 1, **characterized by**, that the means (122) to provide with voltage and current to facilitate an electrolysis mode of operation are integrated to said means (123) for loading the fuel cells (103).

3. An arrangement in accordance with claim 1, **characterized by**, that the arrangement comprises at least one DC-DC (Direct Current-Direct Current) converter (123) as the means (123) for loading the fuel cells (103), the converter comprising a galvanic isolation stage (135) and power electronic switching means (137) for performing bidirectional power flow (144) to operate a fuel cell voltage substantially higher than a fuel cell voltage In the loading of the fuel cells (103).

4. An arrangement In accordance with claim 1, **characterized by**, that the arrangement comprises a non-isolating pre-regulator (122) as the means (122) to provide with voltage and current to facilitate an electrolysis mode of operation prior to the means (123) for loading the fuel cells (103).

5. An arrangement In accordance with claim 1, **characterized by**, that the means (122) to provide with voltage and current to facilitate an electrolysis mode of operation comprises a power stage topology to perform boost operation in a reversed power flow mode.

6. An arrangement in accordance with claim 5, **characterized by**, that the means (122) to provide a part of the fuel cells (103) with voltage and current to facilitate an electrolysis mode of operation are rated below the maximum power of the power stage topology.

7. A method for enhancing start-up heating of a high temperature fuel cell device, in which method is produced electricity by fuel cells (103) comprising an anode side (100), a cathode side (102), an electrolyte (104) between the anode side and the cathode side, and the fuel cells (103) are heated by using at least one heating source, **characterized by**, that In the method is provided a part of the fuel cells (103) with voltage and current to facilitate an electrolysis mode of operation producing hydrogen, Is simultaneously loaded another part of the fuel cells, is circulated fuel through the anode sides (100) of the fuel cells (103), is performed Internal circulation of hydrogen and power In the fuel cell device to supply at least part of the hydrogen produced by the electrolysis to the fuel cells (103) being loaded, and said power being utilized in the heating of the fuel cells (103) at least relatively close to their nominal operating temperature, and in the method is released requirements on the heating source (138) by decreasing the amount of fuel feed-in and by decreasing the amount of internal reforming required to draw current from the fuel cells (103) during start-up of the fuel cell device.

8. A method in accordance with claim 7, **characterized by**, that the providing with voltage and current to facilitate an electrolysis mode of operation is operationally Integrated with the loading the fuel cells (103).

9. A method in accordance with claim 7, **characterized by**, that In the method is utilized at least one DC-DC (Direct Current-Direct Current) converter (123) in the loading of the fuel cells (103) by performing a bidirectional power flow (144) to operate a fuel cell voltage substantially higher than a fuel cell voltage in the loading of the fuel cells (103) on the basis of a galvanic isolation stage (135) and power electronic switching means (137) comprised by the converter (123).

10. A method in accordance with claim 7, **characterized by**, that In the method Is utilized a non-Isolating pre-regulator (122) in providing with voltage and current to facilitate an electrolysis mode of operation.

11. A method in accordance with claim 7, **characterized by**, that in providing with voltage and current to facilitate an electrolysis mode of operation Is utilized a power stage topology to perform boost operation in a reversed power flow mode.

12. A method in accordance with claim 11, **characterized by**, that a part of the fuel cells (103) are provided with voltage and current to facilitate an electrolysis mode of operation by rating below the maximum power of the power stage topology.

## Patentansprüche

1. Anordnung zur Verbesserung der Anlauferhitzung eines Hochtemperatur-Brennstoffzellengeräts, wobei jede Brennstoffzelle (103) in dem Brennstoffzellengerät eine Anodenseite (100), eine Kathodenseite (102) und einen Elektrolyt (104) zwischen der Anodenseite und der Kathodenseite umfasst, und die Anordnung mindestens eine Erhitzungsquelle zum Erhitzen der Brennstoffzellen (103) umfasst, **dadurch gekennzeichnet, dass** die Anordnung Mittel (122) zum Bereitstellen von Spannung und Strom für einen Teil der Brennstoffzellen (103), um eine ElektrolyseBetriebsart zu erleichtern, die Wasserstoff erzeugt, Mittel (123) zum gleichzeitigen Belasten eines anderen Teils der Brennstoffzellen, Mittel (109) zum Inumlaufbringen von Brennstoff durch die Anodenseiten (100) der Brennstoffzellen (103) und zum Durchführen des inneren Umlaufs von Wasserstoff und Leistung in dem Brennstoffzellengerät umfasst, um mindestens einen Teil des durch die Elektrolyse erzeugten Wasserstoffs an die Brennstoffzellen (103) zu liefern, die belastet werden, und die Leistung beim Erhitzen der Brennstoffzellen (103) zumindest relativ nahe an ihre Nennbetriebstemperatur genutzt wird, und die Anordnung die Mittel (122, 123, 109) zum Entlasten der Anforderungen an die Erhitzungsquelle (138) durch Verringern der Menge der Brennstoffzufuhr und durch Verringern der Menge der internen Reformierung umfasst, die erforderlich ist, um Strom von den Brennstoffzellen (103) während des Anlaufs des Brennstoffzellengeräts zu entnehmen.

2. Anordnung nach Anspruch 1, **dadurch gekennzeichnet, dass** die Mittel (122) zum Bereitstellen von Spannung und Strom zum Erleichtern einer Elektrolysebetriebsart in das Mittel (123) zur Belastung der Brennstoffzellen (103) integriert sind.

3. Anordnung nach Anspruch 1, **dadurch gekennzeichnet, dass** die Anordnung mindestens einen DC-DC-Wandler (Gleichstrom-Gleichstrom) (123) als das Mittel (123) zur Belastung der Brennstoffzellen (103) umfasst, wobei der Wandler eine galvanische Trennstufe (135) und elektronische Leistungsschaltmittel (137) zum Durchführen eines bidirektionalen Leistungsflusses (144) zum Betreiben einer Brennstoffzellenspannung umfasst, die im Wesentlichen höher ist als eine Brennstoffzellenspannung beim Belasten der Brennstoffzellen (103).

4. Anordnung nach Anspruch 1, **dadurch gekennzeichnet, dass** die Anordnung einen nicht isolierenden Vorregler (122) als das Mittel (122) zum Bereitstellen von Spannung und Strom zum Erleichtern einer Elektrolysebetriebsart vor dem Mittel (123) zum Belasten der Brennstoffzellen (103) umfasst.

5. Anordnung nach Anspruch 1, **dadurch gekennzeichnet, dass** das Mittel (122) zum Bereitstellen von Spannung und Strom zum Erleichtern einer Elektrolysebetriebsart eine Leistungsstufentopologie umfasst, um einen Verstärkungsbetrieb in einer umgekehrten Leistungsfluss-Betriebsart durchzuführen.

6. Anordnung nach Anspruch 5, **dadurch gekennzeichnet, dass** die Mittel (122) zum Bereitstellen von Spannung und Strom für einen Teil der Brennstoffzellen (103) zum Erleichtern einer Elektrolysebetriebsart eine Nennleistung unter der Höchstleistung der Leistungsstufentopologie aufweisen.

7. Verfahren zur Anlauferhitzung eines Hochtemperatur-Brennstoffzellengeräts, wobei in dem Verfahren Elektrizität durch Brennstoffzellen (103) erzeugt wird, die eine Anodenseite (100), eine Kathodenseite (102) und ein Elektrolyt (104) zwischen der Anodenseite und der Kathodenseite umfassen, und die Brennstoffzellen (103) unter Verwendung von mindestens einer Erhitzungsquelle erhitzt werden, **dadurch gekennzeichnet, dass** in dem Verfahren einem Teil der Brennstoffzellen (103) Spannung und Strom bereitgestellt wird, um eine Elektrolysebetriebsart zu erleichtern, die Wasserstoff erzeugt, gleichzeitig ein anderer Teil der Brennstoffzellen belastet wird, Brennstoff durch die Anodenseiten (100) der Brennstoffzellen (103) in Umlauf gebracht wird, ein internes Umlaufen von Wasserstoff und Leistung in dem Brennstoffzellengerät durchgeführt wird, um zumindest einen Teil des durch die Elektrolyse erzeugten Wasserstoffs den Brennstoffzellen (103) bereitzustellen, die belastet werden, und die Leistung beim Erhitzen der Brennstoffzellen (103) zumindest relativ nahe an ihre Nennbetriebstemperatur verwendet wird, und bei dem Verfahren die Anforderungen an die Erhitzungsquelle (138) durch Verringern der Menge der Brennstoffeinspeisung und durch Verringern der Menge der internen Reformierung entlastet werden, die erforderlich ist, um Strom von den Brennstoffzellen (103) während des Anlaufs des Brennstoffzellengeräts zu entnehmen.

8. Verfahren nach Anspruch 7, **dadurch gekennzeichnet, dass** das Bereitstellen von Spannung und Strom zum Erleichtern einer Elektrolysebetriebsart betriebsfähig in das Belasten der Brennstoffzellen (103) integriert ist.

9. Verfahren nach Anspruch 7, **dadurch gekennzeichnet, dass** in dem Verfahren mindestens ein DC-DC-Wandler (Gleichstrom-Gleichstrom) (123) beim Belasten der Brennstoffzellen (103) durch Durchführen eines bidirektionalen Leistungsflusses (144) verwendet wird, um eine Brennstoffzellenspannung zu betreiben, die im Wesentlichen höher ist als eine Brennstoffzellenspannung beim Belasten der Brennstoffzellen (103) auf der Grundlage einer galvanischen Trennstufe (135) und elektronischer Schaltmittel (137), die im Wandler (123) enthalten sind.

10. Verfahren nach Anspruch 7, **dadurch gekennzeichnet, dass** in dem Verfahren ein nicht isolierender Vorregler (122) beim Bereitstellen von Spannung und Strom zum Erleichtern einer Elektrolysebetriebsart verwendet wird.

11. Verfahren nach Anspruch 7, **dadurch gekennzeichnet, dass** beim Bereitstellen von Spannung und Strom zum Erleichtern einer Elektrolysebetriebsart eine Leistungsstufentopologie verwendet wird, um Verstärkungsbetrieb in einem Modus mit umgekehrten Leistungsfluss durchzuführen.

12. Verfahren nach Anspruch 11, **dadurch gekennzeichnet, dass** einem Teil der Brennstoffzellen (103) Spannung und Strom bereitgestellt werden, um eine Elektrolysebetriebsart durch eine Nennleistung unter der Höchstleistung der Leistungsstufentopologie zu erleichtern.

## Revendications

1. Agencement pour améliorer le chauffage de démarrage d'un dispositif de piles à combustible à haute température, chaque pile à combustible (103) dans le dispositif de piles à combustible comprenant un côté anode (100), un côté cathode (102), un électrolyte (104) entre le côté anode et le côté cathode, et l'agencement comprenant au moins une source de chauffage pour chauffer les piles à combustible (103), **caractérisé en ce que** l'agencement comprend des moyens (122) pour alimenter une partie des piles à combustible (103) avec une tension et un courant afin de faciliter un fonctionnement en mode d'électrolyse produisant de l'hydrogène, des moyens (123) pour simultanément charger une autre partie des piles à combustible, des moyens (109) pour faire circuler du combustible via les côtés anode (100) des piles à combustible (103) et pour effectuer une circulation interne d'hydrogène et de puissance dans le dispositif de piles à combustible afin de fournir au moins une partie de l'hydrogène produit par l'électrolyse aux piles à combustibles (103) qui sont chargées, et ladite puissance étant utilisée lors du chauffage des piles à combustible (103) au moins de manière relativement proche de leur température de fonctionnement nominale, et l'agencement comprenant des moyens (122, 123, 109) pour éliminer des exigences concernant la source de chauffage (138) en réduisant la quantité de combustible alimentée et en réduisant la quantité de reformage interne nécessaire pour soutirer du courant des piles à combustible (103) pendant le démarrage du dispositif de piles à combustible.

2. Agencement selon la revendication 1, **caractérisé en ce que** les moyens (122) pour fournir de la tension et du courant afin de faciliter un fonctionnement en mode d'électrolyse sont intégrés dans lesdits moyens (123) pour charger les piles à combustible (103).

3. Agencement selon la revendication 1, **caractérisé en ce que** l'agencement comprend au moins un convertisseur CC-CC (Courant Continu-Courant Continu) (123) en tant que les moyens (123) pour charger les piles à combustible (103), le convertisseur comprenant un étage d'isolation galvanique (135) et un moyen de commutation électronique de puissance (137) pour réaliser un débit de puissance bidirectionnel (144) afin d'exploiter une tension de piles à combustible sensiblement plus élevée qu'une tension de piles à combustible lors de la charge des piles à combustible (103).

4. Agencement selon la revendication 1, **caractérisé en ce que** l'agencement comprend un pré-régulateur de non isolation (122) en tant que les moyens (122) pour fournir de la tension et du courant afin de faciliter un fonctionnement en mode d'électrolyse avant les moyens (123) pour charger les piles à combustible (103).

5. Agencement selon la revendication 1, **caractérisé en ce que** les moyens (122) pour fournir de la tension et du courant afin de faciliter un fonctionnement en mode d'électrolyse comprennent une topologie d'étage de puissance afin d'effectuer une opération d'augmentation dans un mode de circulation de puissance inversée.

6. Agencement selon la revendication 5, **caractérisé en ce que** les moyens (122) pour alimenter une partie des piles à combustible (103) en tension et en courant afin de faciliter un fonctionnement en mode d'électrolyse sont dimensionnés comme étant inférieurs à la puissance maximale de la topologie d'étage de puissance.

7. Procédé pour améliorer le chauffage de démarrage d'un dispositif de piles à combustible à haute température, dans lequel procédé, de l'électricité est produite par des piles à combustible (103) comprenant un côté anode (100), un côté cathode (102), un électrolyte (104) entre le côté anode et le côté cathode, et les piles à combustible (103) étant chauffées en utilisant au moins une source de chauffage, **caractérisé en ce que**, dans le procédé, on alimente une partie des piles à combustible (103) avec de la tension et du courant afin de faciliter un fonctionnement en mode d'électrolyse produisant de l'hydrogène, **en ce que** simultanément une autre partie des piles à combustible est chargée, **en ce que** l'on fait circuler du combustible via les côtés anode (100) des piles à combustible (103), **en ce que** l'on effectue une circulation interne d'hydrogène et de puissance dans le dispositif de piles à combustible afin de fournir au moins une partie de l'hydrogène produit par l'électrolyse aux piles à combustible (103) qui sont chargées, et ladite puissance étant utilisée pour le chauffage des piles à combustible (103) au moins de manière relativement proche de leur température de fonctionnement nominale, et dans le procédé, des exigences concernant la source de chauffage (138) étant éliminées en réduisant la quantité d'alimentation en combustible et en réduisant la quantité de reformage interne nécessaire pour soutirer du courant des piles à combustible (103) pendant le démarrage du dispositif de piles à combustible.

8. Agencement selon la revendication 7, **caractérisé en ce que** la fourniture de tension et de courant pour faciliter un fonctionnement en mode d'électrolyse est intégrée de manière opérationnelle dans la charge des piles à combustible (103).

9. Procédé selon la revendication 7, **caractérisé en ce que**, dans le procédé, on utilise au moins un convertisseur CC-CC (Courant Continu - Courant Continu) (123) lors de la charge des piles à combustible (103) en réalisant un débit de puissance bidirectionnel (144) afin d'exploiter une tension de piles à combustible sensiblement plus élevée qu'une tension de piles à combustible lors de la charge des piles à combustible (103) sur la base d'un étage d'isolation galvanique (135) et d'un moyen de commutation de puissance électronique (137) compris par le convertisseur (123).

10. Procédé selon la revendication 7, **caractérisé en ce que**, dans le procédé, on utilise un pré-régulateur de non isolation (122) lors de la fourniture de courant et de tension afin de faciliter un fonctionnement en mode d'électrolyse.

11. Procédé selon la revendication 7, **caractérisé en ce que**, lors de la fourniture de tension et de courant afin de faciliter un fonctionnement en mode d'électrolyse, on utilise une topologie d'étage de puissance afin de réaliser une opération d'augmentation dans un mode de circulation de puissance inversée.

12. Procédé selon la revendication 11, **caractérisé en ce qu'**une partie des piles à combustible (103) sont alimentées en tension et courant afin de faciliter un fonctionnement en mode d'électrolyse grâce à un dimensionnement inférieur à la puissance maximale de la topologie d'étage de puissance.
